# EUROPEAN PATENT APPLICATION

(11) **EP 4 227 330 A1**
(43) Date of publication of application: **16.08.2023**
(21) Application number: 21877611.0
(22) Date of filing: 05.10.2021
(51) Int. Cl.: C08F 20/20, C08F 2/44, C08F 2/50, B33Y 80/00, B29C 64/165, B29C 64/264, C08K 3/013, B33Y 70/10

(54) **RESIN COMPOSITION FOR STEREOLITHOGRAPHY**

(30) Priority: 08.10.2020 JP 2020170363
(71) Applicant: DIC Corporation, Tokyo 174-8520 (JP)
(72) Inventor: ARIGA Youhei, Ichihara-shi, Chiba 290-8585 (JP); NISHIZAWA Shigetoshi, Ichihara-shi, Chiba 290-8585 (JP)
(74) Representative: TBK
(86) International application number: PCT/JP2021/036797
(87) International publication number: WO 2022/075312

(57) **Abstract**

An object of the present invention is to provide a resin composition for stereolithography that can reduce generation of color unevenness and provide excellent formability. The present invention has achieved this object by providing a resin composition for stereolithography including an ultraviolet curable resin (A) and an inorganic pigment (B) that are blended, in which the inorganic pigment (B) has a specific gravity of 2.0 ≤ ρ and a particle size distribution of a particle diameter of D50 ≤ 5 µm and D90 ≤ 20 um, and a viscosity of the resin composition for stereolithography at 25°C is 100 Pa·s or more.

## Description

### Technical Field

The present invention relates to a resin composition for stereolithography used for forming a three-dimensional formed product.

### Background Art

In recent years, various formed products have been formed by an optical three-dimensional forming method and have been used in a wide range of applications. As these formed products, a lot of personal use products such as dental materials and artificial limbs that satisfy the required properties of individual consumers have been produced.

For resins for stereolithography used in such an optical three-dimensional forming method, addition of coloring materials such as pigments or fine-particle components to a light curing resin has been performed for the purpose of improving work efficiency (refer to PTL 1).

### Citation List

### Patent Literature

PTL 1: Japanese Unexamined Patent Application Publication (Translation of PCT Application) No. 2016-505525

### Summary of Invention

### Technical Problem

At the time of forming by the optical three-dimensional forming method, however, problems in which the added fine particles are settled out to cause color unevenness in the formed product and formability deteriorates due to excessive light shield caused by the fine particles have existed.

An object of the present invention is to provide a resin composition for stereolithography that can reduce generation of color unevenness and provide excellent formability.

### Solution to Problem

The present invention has solved the above problems by providing a resin composition for stereolithography including an ultraviolet curable resin (A) and an inorganic pigment (B) that are blended, in which the inorganic pigment (B) has a specific gravity of 2.0 ≤ ρ and a particle size distribution of a particle diameter of D50 ≤ 5 µm and D90 ≤ 20 um, and a viscosity of the resin composition for stereolithography at 25°C is 100 mPa·s or more.

Furthermore, the present invention may provide the ultraviolet curable resin (A) including modified bisphenol A dimethacrylate represented by Formula (I): 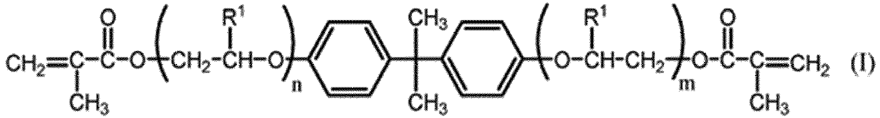 in which R¹ represents a hydrogen atom or a methyl group; a plurality of R¹s in the same molecule are the same as or different from each other; m and n each independently represent an integer of 1 or more; and m + n is 4 to 40.

Furthermore, the resin composition for stereolithography according to the present invention may include a long-wavelength photopolymerization initiator.

In addition, the present invention relates to a formed resin product formed by photo-curing the resin composition for stereolithography.

In addition, the formed resin product formed by photo-curing the resin composition for stereolithography may have a total light transmittance of less than 60% when the total light transmittance is measured using a sample slice having a thickness of 1 mm in a beam irradiation direction. Advantageous Effects of Invention

According to the present invention, the resin composition for stereolithography that can reduce the generation of color unevenness and provide excellent formability can be provided.

### Description of Embodiments

Hereinafter, several embodiments of the present invention will be described in detail. The present invention, however, is not limited to the following embodiments.

The present invention relates to a resin composition for stereolithography including an ultraviolet curable resin (A) and an inorganic pigment (B) that are blended, in which the inorganic pigment (B) has a specific gravity of 2.0 ≤ ρ and a particle size distribution of a particle diameter of D50 ≤ 5 µm and D90 ≤ 20 um, and a viscosity of the resin composition for stereolithography at 25°C is 100 mPa·s or more.

The ultraviolet curable resin (A) according to the present invention is not particularly limited as long as the effects of the present invention can be obtained. Photo-radical polymerizable compounds such as monofunctional or polyfunctional acrylic group-containing polymerizable compounds and photo-cationic polymerizable compounds such as epoxy compounds and oxetane compounds can be used. Although various kinds of the ultraviolet curable resins can be used as described above, the photo-radical polymerizable compounds are preferably used because the warpage of the formed resin product after stereolithography is reduced and sufficient toughness and mechanical properties are provided.

As the ultraviolet curable resin (A) used in the present invention, using modified bisphenol A dimethacrylate represented by Formula (I): 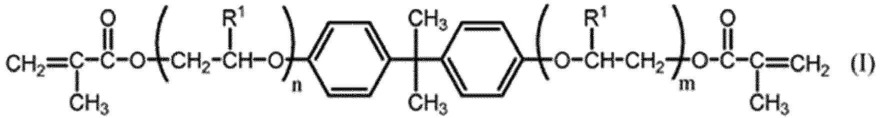 in which R¹ represents a hydrogen atom or a methyl group; a plurality of R¹s in the same molecule may be the same as or different from each other; m and n each independently represent an integer of 1 or more; and m + n is 4 to 40 allows the generation of color unevenness to be suitably reduced and excellent formability to be provided, which is particularly preferable.

R¹ in Formula (I) represents a hydrogen atom or a methyl group, a plurality of R¹s in the same molecule may be the same as or different from each other, m and n each independently represent an integer of 1 or more, and m + n is 4 to 40. When R¹ in Formula (I) is a hydrogen atom, the modified bisphenol A dimethacrylate may be referred to as ethylene oxide-modifiedbisphenol-A dimethacrylate, and when R¹ is a methyl group, the modified bisphenol A dimethacrylate may be referred to as propylene oxide-modified bisphenol A dimethacrylate.

In the modified bisphenol A dimethacrylate, when m + n (a modified amount) is four or more, the toughness and strength of the three-dimensional formed product are significantly improved. From a similar viewpoint, m + n may be 6 or more or 10 or more. In addition, m + n may be 30 or less. In the case where the ultraviolet curable resin (A) includes a plurality of kinds of modified bisphenol A dimethacrylates of Formula (1) having different m + n, the average of m + n may be 4 to 40. As long as the effects of the present invention are obtained, this ultraviolet curable resin (A) may be used by adding other ultraviolet curable resins as photo-polymerizable components.

As the ultraviolet curable resin (A) used in the present invention, for example, ultraviolet curable resins sold under the names of MIRAMER M241, MIRAMER M2101, and MIRAMER M2301 (all of them are product names and are manufactured by Miwon Specialty Chemical Co. Ltd.) as commercial names can be used.

The content of the ultraviolet curable resin (A) in the present invention is not particularly limited as long as the effects of the present invention are obtained. In the resin composition for stereolithography, the content of the ultraviolet curable resin (A) is preferably 15% by mass or more and 70% by mass or less because the strength of the formed product is excellent, more preferably 20% by mass or more and 60% by mass or less because the elastic modulus and the toughness of the formed product are improved, and particularly preferably 30% by mass or more and 50% by mass or less because a degree of forming accuracy is improved. Setting the content of the ultraviolet curable resin (A) within the above range allows an excellent effect to be likely to be obtained from the viewpoint of reduction in odor and warpage of the formed product. Hereafter, "% by mass" in the present specification means a ratio in the case where the entire resin composition for stereolithography is determined to be 100% by mass.

The inorganic pigment (B) used in the present invention is characterized by having a specific gravity of 2.0 ≤ ρ and a particle size distribution of a particle diameter of D50 ≤ 5 µm and D90 ≤ 20 um. Including the pigment that satisfies the requirement of the above specific gravity and particle diameter as the inorganic pigment allows sedimentation over time to be excellently reduced and also suitable formability to be obtained at the time of forming.

In the present invention, the specific gravity of the inorganic pigment was measured using "Methods of measuring density and specific gravity of solid" in JIS Z 8807:2012. The particle diameter was measured by "Particle size analysis-Laser diffraction methods" in JIS Z8825 to determine the particle size distribution of the inorganic pigment.

The inorganic pigment (B) used in the present invention has a specific gravity of 2.0 ≤ ρ. Furthermore, from the viewpoint of sedimentation reduction, a specific gravity is preferably 2.0 ≤ ρ ≤ 6.0 and most preferably 2.0 ≤ ρ ≤ 4.0.

The inorganic pigment (B) used in the present invention has a particle size distribution of D50 ≤ 5 µm and D90 ≤ 20 um. From the viewpoint of sedimentation reduction and improvement in curing efficiency, the particle size distribution is more preferably D50 ≤ 4 µm and D90 ≤ 10 µm. D50 and D90 described above refer to the particle diameters that are 50% and 90% of the integrated values of the particles in the particle size distribution obtained above, respectively.

As the inorganic pigment used in the present invention, various inorganic pigments can be used as long as the inorganic pigments satisfy the conditions of the above specific gravity and particle diameters of D50 and D90. As these inorganic pigments, titanium oxide, iron oxide, zinc oxide, red iron oxide, cobalt blue, ultramarine blue, iron black, titanium yellow, and the like can be used. Titanium oxide and iron oxide are particularly preferably used because titanium oxide and iron oxide provide excellent effect in sedimentation reduction and have excellent formability.

The inorganic pigment (B) used in the present invention can also be used as dispersion liquids in various solvents, if necessary. The solvents used at the time of producing these dispersion liquids are not particularly limited as long as the effects of the present invention can be obtained. Inorganic solvents such as water and alcohol and other various organic solvents can be used. Dispersing aids may also be added in order to improve dispersibility.

As the inorganic pigment (B), an inorganic pigment that improves the curing efficiency by active energy rays at the time of stereolithography is preferably used and can be appropriately selected depending on the wavelength of the active energy rays used at the time of curing. As coloring agents to improve the curing efficiency by the active energy rays, titanium oxide, iron oxide, zinc oxide, red iron oxide, cobalt blue, ultramarine blue, iron black, titanium yellow, and the like can be used.

Examples of the inorganic pigment (B) that can be used in the present invention include COD-8001, COD-8005, and COD-8008 manufactured by Sun Chemical Corporation.

In the present invention, the content of the inorganic pigment (B) is not particularly limited as long as the effects of the present invention can be obtained. The content is preferably 0.005% by mass or more and 10% by mass or less, further preferably 0.01% by mass or more and 5% by mass or less because ultraviolet curing excellently proceeds, and most preferably 0.01% by mass or more and 3% by mass or less because the generation of color unevenness is reduced most.

The long-wavelength photopolymerization initiator used in the present invention may be a polymerization initiator that promotes the initiation of curing in response to light having a wavelength of 385 nm or more and is not particularly limited as long as the compound can initiate the photo-radical polymerization of the ultraviolet curable resin (A) used in the present invention. The long-wavelength polymerization initiator indicating excellent polymerization initiation reaction to light having a wavelength of 385 nm or 405 nm is preferable.

Examples of the long-wavelength photopolymerization initiator used in the present invention can include at least one compound selected from 1-hydroxy-cyclohexyl-phenyl-ketone, 2-hydroxy-2-methyl-1-phenyl-propan-1-one, 2-hydrodoxy-1-{4-[4-(2-hydroxy-2-methyl-propionyl)-benzyl]phenyl}-2-methyl-propan-1-one, 2-methyl-1-(4-methylthiophenyl)-2-morpholinopropan-1-one, bis(2,4,6-trimethylbenzoyl)-phenylphosphine oxide, and diphenyl(2,4,6-trimethylbenzoyl)phosphine oxide.

The content of the long-wavelength photopolymerization initiator is not particularly limited as long as the effects of the invention can be obtained. The content may be 0.1 parts by mass to 15 parts by mass for 100 parts by mass of the photo polymerizable compound and 0.5 parts by mass to 10 parts by mass is particularly preferable because excellent formability can be obtained.

As the long-wavelength photopolymerization initiators used in the present invention, for example, "Omnirad 819" (product name, manufactured by IGM Resins B.V.), "Omnirad TPO" (product name, manufactured by IGM Resins B.V.), and "KAYACURE DETX-S" (product name, manufactured by Nippon Kayaku Co., Ltd.) can be used.

The resin composition for stereolithography according to the present invention includes the ultraviolet curing resin (A) and the inorganic pigment (B) and has a viscosity of 100 mPa·s or more at 25°C. Satisfying the above conditions of (A) and (B) and furthermore making the viscosity of the resin composition for stereolithography within the above range allow the generation of color unevenness to be suitably reduced. The viscosity of the resin composition for stereolithography may be 100 mPa·s or more as described above and is preferably 400 Pa·s or more because the generation of color unevenness is more reduced.

The resin composition for stereolithography may include various solvents for the purpose of viscosity adjustment and the like or may be substantially solvent-free. For example, the ratio of the solvent to the total amount of resin composition for stereolithography may be less than 5% by mass, less than 3% by mass, or less than 1% by mass.

In addition to the components described above, the resin composition for stereolithography may include other components, if necessary. Examples of the other components include UV stabilizers, polymerization inhibitors, antioxidants, stabilizers, leveling agents, defoamers, thickeners, flame retardants, sensitizers, surfactants, dyes, inorganic pigments other than the (B) component, organic pigments, fluorescent dyes, inorganic fillers, and organic fillers.

The optical three-dimensional forming method in which the light-curing of the resin compositions for stereolithography according to the present invention is repeated sequentially allows the three-dimensional formed product to be easily produced in a short period of time. The optical three-dimensional forming method is not particularly limited and may be, for example, a surface-exposure method (DLP: Digital Light Processing). The formed three-dimensional formed product may be post-cured by light irradiation.

The present invention may also provide a resin composition formed by curing the resin compositions for stereolithography by various optical three-dimensional forming methods (hereinafter referred to as a "cured resin composition"). The cured resin composition according to the present invention as described above may be characterized in that the total light (or UV) transmittance of the cured resin composition is less than 60% when the total light (or UV) transmittance is measured using a sample slice having a thickness of 1 mm in a beam irradiation direction. The total light transmittance after forming within the above range allows the contrast of the surface of the cured resin composition to be improved and the appearance of the formed product to be excellent.

The cured resin composition according to the present invention is formed and used depending on desired applications. Examples of these applications include dental products such as dentures, inlays, bridges, mouth guards, crowns, and surgical guides, body aids such as prosthetic limbs and cast models of jewelry.

### [Examples]

Hereinafter, the present invention will be further specifically described in detail with reference to Examples. The invention, however, is not limited to these Examples. (Hereinafter, "part" described with respect to the amount of each component means "part by mass").

### (Example 1)

In a container equipped with a stirrer, 100 parts by mass of bisphenol A ethylene oxide modified (4 mol addition) dimethacrylate, 2 parts by mass of a photopolymerization initiator ("Omnirad 819"; 2,4,6-trimethylbenzoyl diphenylphosphine oxide, manufactured by IGM Resins B.V.), and 0.3 parts by mass of a titanium oxide dispersion (titanium oxide content 50%, specific gravity of titanium oxide: 4.0, D50: 1.2 um, D90: 15 µm) were blended and the resultant mixture was stirred and mixed for 1 hour while the liquid temperature was controlled to 60°C to dissolve uniformly, whereby a resin composition for stereolithography (1) was obtained.

### (Example 2)

In a container equipped with a stirrer, 100 parts by mass of bisphenol A ethylene oxide modified (4 mol addition) dimethacrylate, 1.4 parts by mass of a photopolymerization initiator ("Omnirad 819"; 2,4,6-trimethylbenzoyl diphenylphosphine oxide, manufactured by IGM Resins B.V.), and 0.3 parts by mass of a titanium oxide dispersion (titanium oxide content 50%, specific gravity of titanium oxide: 4.0, D50: 1.2 um, D90: 15 um), 0.11 parts by mass of an iron oxide dispersion (iron oxide content 50%, specific gravity of iron oxide: 5.0, D50: 1.5 um, D90: 20 um), and 0.03 parts by mass of a rake pigment dispersion (rake pigment content 40%, specific gravity of rake pigment: 1.6, D50: 1.0 um, D90: 12 µm) were blended and the resultant mixture was stirred and mixed for 1 hour while the liquid temperature was controlled to 60°C to dissolve uniformly, whereby a resin composition for stereolithography (2) was obtained.

### (Example 3)

In a container equipped with a stirrer, 100 parts by mass of bisphenol A ethylene oxide modified (4 mol addition) dimethacrylate, 1.1 parts by mass of a photopolymerization initiator ("TPO-H"; diphenyl(2,4,6-trimethylbenzoyl)phosphine oxide), manufactured by IGM Resins B.V.), 0.3 parts by mass of a titanium oxide dispersion (titanium oxide content 50%,specific gravity of titanium oxide: 4.0, D50: 1.2 um, D90: 15 um), and 0.01 parts by mass of a rake pigment dispersion (rake pigment content 40%, specific gravity of rake pigment: 1.6, D50: 1.0 um, D90: 12 µm) were blended and the resultant mixture was stirred and mixed for 1 hour while the liquid temperature was controlled to 60°C to dissolve uniformly, whereby a resin composition for stereolithography (3) was obtained.

### (Example 4)

In a container equipped with a stirrer, 100 parts by mass of bisphenol A ethylene oxide modified (4 mol addition) dimethacrylate, 2 parts by mass of a photopolymerization initiator ("Omnirad 819"; 2,4,6-trimethylbenzoyl diphenylphosphine oxide, manufactured by IGM Resins B.V.), and 0.3 parts by mass of a titanium oxide dispersion (titanium oxide content 50%, specific gravity of titanium oxide: 4.0, D50: 1.2 µm, D90: 15 um), 0.11 parts by mass of an iron oxide dispersion (iron oxide content 50%, specific gravity of iron oxide: 5.0, D50: 1.5 µm, D90: 20 µm) were blended and the resultant mixture was stirred and mixed for 1 hour while the liquid temperature was controlled to 60°C to dissolve uniformly, whereby a resin composition for stereolithography (4) was obtained.

### (Example 5)

In a container equipped with a stirrer, 100 parts by mass of bisphenol A ethylene oxide modified (4 mol addition) dimethacrylate, 5 parts by mass of a photopolymerization initiator ("DETX"; 2,4-diethylthioxanthen-9-one, manufactured by Tokyo Chemical Industry Co., Ltd.), 8 parts by mass of EPA, 0.3 parts by mass of a titanium oxide dispersion (titanium oxide content: 50%, specific gravity of titanium oxide: 4.0, D50: 1.2 µm, D90: 15 um), 0.11 parts by mass of an iron oxide dispersion (iron oxide content 50%, specific gravity of iron oxide: 5.0, D50: 1.5 µm, D90: 20 µm) were blended and the resultant mixture was stirred and mixed for 1 hour while the liquid temperature was controlled to 60°C to dissolve uniformly, whereby a resin composition for stereolithography (5) was obtained.

### (Example 6)

In a container equipped with a stirrer, 50 parts by mass of bisphenol A ethylene oxide modified (4-mol addition) dimethacrylate, 40 parts by mass of PPG400-DMA (NK Ester 9PG), 10 parts by mass of PPG2000 (Uniol D2000), 2 parts by mass of a photopolymerization initiator ("Omnirad 819"; 2,4,6-trimethylbenzoyl diphenylphosphine oxide, manufactured by IGM Resins B.V.), and 0.2 parts by mass of a titanium oxide dispersion (titanium oxide content 50%, specific gravity of titanium oxide: 4.0, D50: 1.2 µm, D90: 15 µm) were blended and the resultant mixture was stirred and mixed for 1 hour while the liquid temperature was controlled to 60°C to dissolve uniformly, whereby a resin composition for stereolithography (6) was obtained.

### (Comparative Example 1)

In a container equipped with a stirrer, 50 parts by mass of bisphenol A ethylene oxide modified (4-mol addition) dimethacrylate, 40 parts by mass of PPG400-DMA (NK Ester 9PG), 10 parts by mass of PPG2000 (Uniol D2000), and 2 parts by mass of a photopolymerization initiator ("Omnirad 819"; 2,4,6-trimethylbenzoyl diphenylphosphine oxide, manufactured by IGM Resins B.V.) were blended and the resultant mixture was stirred and mixed for 1 hour while the liquid temperature was controlled to 60°C to dissolve uniformly, whereby a comparative resin composition for stereolithography (1) was obtained.

### (Comparative Example 2)

In a container equipped with a stirrer, 100 parts by mass of bisphenol A ethylene oxide modified (4 mol addition) dimethacrylate, 2 parts by mass of a photopolymerization initiator ("Om-184"; 1-hydroxycyclohexyl-phenyl ketone, manufactured by IGM Resins B.V.), 0.3 parts by mass of a titanium oxide dispersion (titanium oxide content 50%, specific gravity of titanium oxide: 4.0, D50: 1.2 µm, D90: 15 um), 0.11 parts by mass of an iron oxide dispersion (iron oxide content 50%, specific gravity of iron oxide: 5.0, D50: 1.5 µm, D90: 20 um), and 0.03 parts by mass of a rake pigment dispersion (rake pigment content 40%, specific gravity of rake pigment: 1.6, D50: 1.0 µm, D90: 12 µm) were blended and the resultant mixture was stirred and mixed for 1 hour while the liquid temperature was controlled to 60°C to dissolve uniformly, whereby a comparative resin composition for stereolithography (2) was obtained.

The following compatibility evaluation was performed on the above adjusted resin compositions for stereolithography (1) to (6) and comparative resin compositions for stereolithography (1) and (2).

### (Compatibility evaluation)

The resin compositions for stereolithography (1) to (6) and the comparative resin compositions for stereolithography (1) and (2) were placed in vials and allowed to stand for 24 hours in a light-shielded environment. Thereafter, the presence or absence of the color separation of the samples was visually evaluated by three persons.

### (Evaluation criteria)

o (Three persons evaluated that no color separation occurred.)
× (At least one person evaluated that color separation occurred.)

With respect to the above adjusted resin compositions for stereolithography (1) to (6) and the comparative resin compositions for stereolithography (1) and (2), the formed resin products were prepared by the following process and the curability and total light transmittance of the prepared resin compositions were evaluated.

### (Preparation of formed resin products)

With respect to the resin compositions for stereolithography (1) to (6) and the comparative resin compositions for stereolithography (1) and (2), formed resin products having the predetermined shape were prepared with the resin compositions for stereolithography using a surface-exposure method (digital light processing: DLP) stereolithography system (DLP printer manufactured by ASIGA). The stacking pitch for stereolithography was 0.05 mm to 0.1 mm, the irradiation wavelength was 400 nm to 410 nm, and the light irradiation time was 2 seconds to 20 seconds per layer. The formed resin products were ultrasonically cleaned in ethanol, and thereafter the three-dimensional product was post-cured by irradiating the front surface and back surface of the three-dimensional formed product with light using a high-pressure mercury vapor lamp so that the integrated light intensity was 10,000 mJ/cm² to 2,000 mJ/cm².

### (Evaluation of curability)

Curability: After a formed resin product was formed using a 3D printer, the sensory evaluation of the stickiness of the surface of the ethanol-washed formed resin product was performed by three persons.

### (Evaluation criteria)

o (Three persons evaluated that no stickiness existed.)
× (At least one person evaluated that stickiness existed.)

### (Evaluation of total light transmittance)

In accordance with the above method for preparing the formed resin product, bulks of the resin compositions for stereolithography having a thickness of 1 mm were prepared with respect to the resin compositions for stereolithography (1) to (6) and comparative resin compositions for stereolithography (1) and (2). The transmittances of the various prepared samples were measured using a haze meter in accordance with JIS K 7375: 2008.

The results of the above tests are listed in Table 1 and Table 2.

**[Table 1]**

| | Name | Structure | Example 1 | Example 2 | Example 3 | Example 4 | Example 5 | Example 6 |
|---|---|---|---|---|---|---|---|---|
| Ultraviolet curable resin (A) | MIRAMER M241 | Bisphenol A(EO)4 dimethacrylate | 100 | 100 | 100 | 100 | 100 | 50 |
| | NK Ester 9PG | PPG400-DMA | | | | | | 40 |
| | Uniol D2000 | PPG2000 | | | | | | 10 |
| Photopolymeri zation initiator | Om-184 | 1-Hydroxycyclohexy l-phenyl ketone | | | | | | |
| | DETX | 2,4-Diethyl-9H-thioxanthen-9-one | | | | | 5 | |
| | TPO-H | Diphenyl(2,4,6-trimethylbenzoyl )phosphine oxide | | | 1.1 | | | |
| | Om-819 | Bis(2,4,6-trimethylbenzoyl )phenylphosphine oxide | 2 | 1.4 | | 2 | | 2 |
| Additive | EPA | Ethyl 4-dimethylaminoben zoate | | | | | 8 | |
| Inorganic pigment (B) | Titanium oxide dispersion (titanium oxide content 50%) | | 0.3 | 0.3 | 0.3 | 0.3 | 0.3 | 0.2 |
| | Iron oxide dispersion (iron oxide content 50%) | | | 0.11 | - | 0.11 | 0.11 | |
| | Rake pigment dispersion (rake pigment content 40%) | | | 0.03 | 0.01 | - | - | |
| Evaluation item | Viscosity (mPa·s, 25°C) | | 700 | 700 | 700 | 700 | 700 | 160 |
| | Curability | | ○ | ○ | ○ | ○ | ○ | ○ |
| | Compatibility | | ○ | ○ | ○ | ○ | ○ | ○ |
| | Total light transmittance | | 26 | 26 | 36 | 38 | 38 | 30 |
| Note | | | Satisfyin g both shielding propertie s and compatibi lity due to use of long-wavelengt h P. I. | Satisfyin g both shielding propertie s and compatibi lity due to use of long-wavelengt h P. I. | Satisfyin g both shielding propertie s and compatibi lity due to use of long-wavelengt h P. I. | Satisfyin g both shielding propertie s and compatibi lity due to use of long-wavelengt h P. I. | Satisfyin g both shielding propertie s and compatibi lity due to use of long-wavelengt h P. I. | Excellent curabilit y and compatibi lity even in low viscosity compositi on |

**[Table 2]**

| | Name | Structure | Comparative Example 1 | Comparative Example 2 |
|---|---|---|---|---|
| Ultraviolet curable resin (A) | MIRAMER M241 | Bisphenol A(EO)4 dimethacrylate | 100 | 100 |
| | NK Ester 9PG | PPG400-DMA | | |
| | Uniol D2000 | PPG2000 | | |
| Photopolymerization initiator | Om-184 | 1-Hydroxycyclohexyl-phenyl ketone | | 2 |
| | DETX | 2,4-Diethyl-9H-thioxanthen-9-one | | |
| | TPO-H | Diphenyl(2,4,6-trimethylbenzoyl)phosphine oxide | | |
| | Om-819 | Bis(2,4,6-trimethylbenzoyl)phenylphosphine oxide | 2 | |
| Additive | EPA | Ethyl 4-dimethylaminobenzoate | | |
| Inorganic pigment (B) | Titanium oxide dispersion (titanium oxide content 50%) | | | 0.3 |
| | Iron oxide dispersion (iron oxide content 50%) | | 3 | 0.11 |
| | Rake pigment dispersion (rake pigment content 40%) | | | 0.03 |
| Evaluation item | Viscosity (mPa·s, 25°C) | | 700 | 700 |
| | Curability | | × | × |
| | Compatibility | | × | ○ |
| | Total light transmittance | | 26 | 26 |
| Note | | | Deterioration in curability and compatibility due to increase in iron oxide | Deterioration in curability due to short wavelength P. I. |

As listed in Table 1 and Table 2, the resin compositions for stereolithography in Examples 1 to 7 reduced the generation of color unevenness and exhibited excellent formability. On the other hand, in the resin compositions for stereolithography in Comparative Examples 1 and 2, the generation of the color unevenness due to poor curability and poor compatibility was observed and the evaluation of the formability was also poor.

## Claims

1. A resin composition for stereolithography comprising an ultraviolet curable resin (A) and an inorganic pigment (B) that are blended, wherein
the inorganic pigment (B) has a specific gravity of 2.0 ≤ ρ and a particle size distribution of a particle diameter of D50 ≤ 5 µm and D90 ≤ 20 um, and
a viscosity of the resin composition for stereolithography at 25°C is 100 mPa·s or more.

2. The resin composition for stereolithography according to claim 1, wherein the ultraviolet curable resin (A) comprises modified bisphenol A dimethacrylate represented by Formula (I): 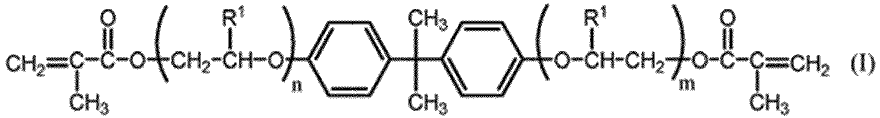 wherein R¹ represents a hydrogen atom or a methyl group; a plurality of R¹s in a same molecule are same as or different from each other; m and n each independently represent an integer of 1 or more; and m + n is 4 to 40.

3. The resin composition for stereolithography according to claim 1 or 2, further comprising a long-wavelength photopolymerization initiator.

4. A formed resin product formed by photo-curing the resin composition for stereolithography according to any one of claims 1 to 3.

5. The formed resin product according to claim 4, wherein the formed resin product has a total light transmittance of less than 60% when the total light transmittance is measured using a sample slice having a thickness of 1 mm in a beam irradiation direction.
